# EUROPEAN PATENT APPLICATION

(11) **EP 4 697 199 A1**
(43) Date of publication of application: **18.02.2026**
(21) Application number: 24838338.2
(22) Date of filing: 19.03.2024
(51) Int. Cl.: G06F 16/438, G06F 16/435, H04N 5/265

(54) **VIDEO PROCESSING METHOD AND ELECTRONIC DEVICE**

(30) Priority: 12.07.2023 CN 202310863205
(71) Applicant: Honor Device Co., Ltd., Shenzhen, Guangdong 518040 (CN)
(72) Inventor: LI, Guanbin, Shenzhen, Guangdong 518040 (CN); YI, Jie, Shenzhen, Guangdong 518040 (CN)
(74) Representative: Gill Jennings & Every LLP
(86) International application number: PCT/CN2024/082327
(87) International publication number: WO 2025/011078

(57) **Abstract**

A video processing method and an electronic device are provided, applied to the field of terminal technologies. In embodiments of this application, an entry of a "Generate moments" function is set in a gallery application, and an electronic device may actively generate for a user, by using the entry, a moment video related to a target portrait, to meet a requirement that the user expects to view photos related to the portrait, greatly improving user experience.

## Description

This application claims priority to Chinese Patent Application No. 202310863205.1, filed with the China National Intellectual Property Administration on July 12, 2023 and entitled "VIDEO PROCESSING METHOD AND ELECTRONIC DEVICE", which is incorporated herein by reference in its entirety.

### TECHNICAL FIELD

This application relates to the field of electronic devices, and more specifically, to a video processing method and an electronic device.

### BACKGROUND

With continuous development of intelligent terminals, a photographing function of the intelligent terminal is increasingly advanced. A user may photograph a photo or a video by using the intelligent terminal to record a past good moment. A requirement and experience of the user when viewing photos also continue to grow.

In some scenarios, when the user views a specific photo, and the photo includes a specific portrait, the user expects to view a historical memory moment of the portrait. However, in an existing intelligent terminal, when viewing a specific photo including a specific portrait, the user may need to tap a portrait tag to view a photo related to the portrait, and a video related to the portrait cannot be generated actively, resulting in poor user experience.

### SUMMARY

In view of this, this application provides a video processing method, an electronic device, a computer-readable storage medium, and a computer program product, to actively generate a memory video related to an object in a photo, greatly improving user experience.

According to a first aspect, a video processing method is provided, including:
displaying a first interface in response to a first operation of a user, where the first interface includes a thumbnail of a first photo, and the first photo includes a first portrait;
displaying a second interface in response to an operation of the user tapping the thumbnail of the first photo, where the second interface is used for displaying a viewing page of the first photo;
displaying a third interface in response to a second operation (for example, an operation of swiping upwards on a screen) of the user on the second interface, where the third interface includes a first area, and the first area includes a first control; and
displaying a playback interface of a first video in response to an operation of the user tapping the first control, where the first video includes the first photo and a second photo, and the second photo includes the first portrait.

The foregoing method may be performed by an electronic device or a chip in the electronic device. Based on the foregoing technical solution, after receiving the second operation of the user on the second interface, if the electronic device (or the chip in the electronic device) recognizes a portrait, an entry (for example, the first control in the first area) for generating a moment video is displayed on an interface. After the user taps the first control, the first video may be generated in response to the operation of the user tapping the first control. The first video is generated based on a plurality of photos including the first portrait. In comparison with that the user flips through, by using a portrait tag, a plurality of photos related to a portrait, in this embodiment of this application, an entry of a "Generate moments" function is set in a gallery application, and the electronic device may actively generate for the user, by using the entry, a moment video related to a target portrait, to meet a requirement that the user expects to view photos related to the portrait, greatly improving user experience.

In some social situations, such as a party, the user may share a past photo of a family or a friend by viewing a photo, or the user views a specific photo alone. Based on a portrait included in a photo being viewed, a recall video of the portrait is generated, to trigger users to recall, provide a topic demand for the users, and help the users quickly find a common memory.

It may be understood that in addition to the first area, the third interface may further include other information of the first photo.

In some possible implementations, the third interface further includes a partial area of the first photo, a second area, and/or a third area. The second area is used for displaying portrait tag information. The third area is used for displaying photographing location information of the first photo.

In some possible implementations, the first interface further includes a thumbnail of a second photo, and the second photo does not include a portrait. The method further includes:
displaying a fourth interface in response to an operation of the user tapping the thumbnail of the second photo, where the fourth interface is used for displaying a viewing page of the second photo; and
displaying a fifth interface in response to a fourth operation (for example, an operation of swiping upwards on a screen) of the user on the fourth interface, where the fifth interface does not include the first control.

In other words, for a case in which a photo does not include a portrait, when the user views a full image of the photo, the electronic device does not display the entry of the "Generate moments" function in the first area in response to an operation of the user swiping upwards on a screen.

In some possible implementations, after the displaying a playback interface of a first video, the method further includes:
displaying a sixth interface in response to a fifth operation (for example, an operation of tapping a return control or swiping sideward on a screen) of the user on the playback interface of the first video, where the sixth interface includes the first area, the first area does not include the first control, and the first area includes a thumbnail and a playback control of the first video; and
displaying the playback interface of the first video in response to an operation of the user tapping the playback control.

Therefore, when the first video has been generated, and the user returns to a previous interface (that is, a swipe-up page when viewing the first photo in a full image), the function entry for generating a moment originally displayed in the first area is changed to the thumbnail of the first video, to facilitate the user taping to view the generated first video.

In some possible implementations, the first interface further includes a thumbnail of a third photo, and the third photo includes the first portrait. The method further includes:
displaying a ninth interface in response to an operation of the user tapping the thumbnail of the third photo, where the ninth interface is used for displaying a viewing page of the third photo; and
displaying a tenth interface in response to a seventh operation of the user on the ninth interface, where the fifth interface includes the first area, and the first area includes the thumbnail and the playback control of the first video.

Therefore, when the first video has been generated, for another photo, for example, the third photo, including a same portrait as the first photo, when a full image of the third photo is viewed, the electronic device generates the thumbnail of the first video in response to an operation of the user swiping upward on a screen, to facilitate the user viewing.

Optionally, the first area further includes a third control. The method further includes:
updating the first video in response to an operation of the user tapping the third control; and
displaying a playback interface of an updated first video after the update is completed.

In other words, an update control is set, and a generated moment video may be further updated, to provide a corresponding entry for the user to actively update the moment video.

In some possible implementations, the method further includes:
displaying an eleventh interface in response to an eighth operation of the user, where the eleventh interface is used for displaying a moment page of a gallery application, and the eleventh interface includes a second control;
displaying a twelfth interface in response to an operation of the user tapping the second control, where the twelfth interface is used for displaying data of a plurality of portraits;
generating a third video in response to an operation of the user selecting the first portrait, where the third video is an updated video of the first video; and
displaying a playback interface of the third video.

In other words, the generated first video may be updated by actively selecting the target portrait, to meet a requirement of the user for updating a moment video of the target portrait.

In some possible implementations, the first interface further includes a thumbnail of a fourth photo, where the fourth photo includes a second quantity of portraits, and the second quantity is greater than a second threshold. The method further includes:
displaying a thirteenth interface in response to an operation of the user tapping the thumbnail of the fourth photo, where the thirteenth interface is used for displaying a viewing page of the fourth photo;
displaying a fourteenth interface in response to a fourth operation of the user on the thirteenth interface, where the fourteenth interface includes the first area, and the first area includes the first control; and
displaying a fifteenth interface in response to an operation of the user tapping the first control, where the fifteenth interface includes a first window, and the first window is used for prompting the user that a video cannot be generated.

Therefore, when a quantity of portraits in a photo exceeds an upper limit, a pop-up window may be used for prompting the user, so that the user is informed that a moment video cannot be generated.

In some possible implementations, the method further includes:
displaying a sixteenth interface in response to the operation of the user tapping the first control, where the sixteenth interface includes a second window, the second window is used for prompting the user that a video cannot be generated, and a quantity of photos including the first portrait is less than a first threshold.

Therefore, when a quantity of photos including the target portrait is excessively small, a pop-up window may be used for prompting the user, so that the user is informed that a moment video cannot be generated.

In some possible implementations, during generating of the first video, the method further includes:
displaying a dynamic icon in the first area, where the dynamic icon indicates that the first video is being generated. Therefore, during generating of a moment video, the dynamic icon may be displayed, so that the user is informed that the moment video is being generated currently.

An embodiment of this application further provides another function entry for generating a moment. The entry of the "Generate moments" function is located on a moment page in a gallery application.

In some possible implementations, the method further includes:
displaying a seventh interface in response to a sixth operation of the user, where the seventh interface is used for displaying a moment page of a gallery application, and the seventh interface includes a second control;
displaying an eighth interface in response to an operation of the user tapping the second control, where the eighth interface is used for displaying data of a plurality of portraits;
generating a second video in response to an operation of the user selecting a second portrait, where the second video includes photos of the second portrait; and
displaying a playback interface of the second video.

Therefore, after the function entry for generating a moment video on the moment page is tapped, selection for the target portrait is provided, to generate a moment video related to a target object expected by the user. This is more targeted.

In some possible implementations, the method further includes:
generating a third video in response to an operation of the user selecting a third portrait, where the third video is generated based on single-person photos of the third portrait; and
displaying a playback interface of the third video.

Similarly, for a scenario in which the user selects the target portrait to generate a moment video, there may be a case in which the video cannot be generated.

In some possible implementations, the method further includes:
displaying a seventeenth interface in response to an operation of the user selecting a third portrait, where the seventeenth interface includes a third window, the third window is used for prompting the user that a video cannot be generated, and a quantity of photos including the third portrait is less than a third threshold.

In some possible implementations, after the displaying an eighth interface, the method further includes:
displaying an eighteenth interface in response to an operation of the user selecting a third quantity of portraits, where the eighteenth interface includes a fourth window, the fourth window is used for prompting the user that a video cannot be generated, and the third quantity is greater than a fourth threshold.

In some possible implementations, after the first video is generated, the method further includes:
obtaining a plurality of second photos based on the first portrait, where each second photo includes the first portrait;
selecting, from the plurality of second photos, a first quantity of second photos according to a principle of even time distribution; and
selecting, from the first quantity of second photos, a second quantity of second photos according to a principle of a timeline from earliest to latest.

That the first video is generated includes:
generating the first video based on the second quantity of second photos and the first photo.

Therefore, by using the foregoing mechanism for selecting a photo and the foregoing mechanism for generating a video, a moment video generated by photos in different timelines may be obtained, and user experience is better.

According to a second aspect, a video processing method is provided, including:
displaying a seventh interface in response to a sixth operation of a user, where the seventh interface is used for displaying a moment page of a gallery application, and the seventh interface includes a second control;
displaying an eighth interface in response to an operation of the user tapping the second control, where the eighth interface is used for displaying data of a plurality of portraits;
generating a second video in response to an operation of the user selecting a second portrait, where the second video includes photos of the second portrait; and
displaying a playback interface of the second video.

The foregoing method may be performed by an electronic device or a chip in the electronic device. Based on the foregoing technical solution, the electronic device (or the chip in the electronic device) provides an entry of a "Generate moments" function located on the moment page of the gallery application. The user may actively select a target portrait by using the entry. The electronic device actively generates a moment video related to a target object based on the target portrait selected by the user. This is more targeted, and greatly improves user experience.

For the entry of the "Generate moments" function on the moment page of the gallery application, for some possible implementations and technical effects of the implementations, refer to the descriptions in the first aspect. For brevity, details are not described herein again.

According to a third aspect, an electronic device is provided, including a unit configured to perform the method according to any implementation in the first aspect or the second aspect. The electronic device may be a terminal device or a chip in the terminal device. The electronic device includes an input unit, a display unit, and a processing unit.

When the electronic device is the terminal device, the processing unit may be a processor, the input unit may be a communication interface, and the display unit may be a graphics processing module and a screen. The terminal device may further include a memory. The memory is configured to store computer program code. When the processor executes the computer program code stored in the memory, the terminal device is enabled to perform the method according to any implementation in the first aspect or the second aspect.

When the electronic device is the chip in the terminal device, the processing unit may be a logic processing unit inside the chip, the input unit may be an input interface, a pin, a circuit, or the like, and the display unit may be a graphics processing unit inside the chip. The chip may further include a memory. The memory may be a memory (for example, a register or a buffer) in the chip, or may be a memory (for example, a read-only memory or a random access memory) located outside the chip. The memory is configured to store computer program code. When the processor executes the computer program code stored in the memory, the chip is enabled to perform the method according to any implementation in the first aspect or the second aspect.

According to a fourth aspect, a computer-readable storage medium is provided. The computer-readable storage medium stores computer program code. When the computer program code is run by an electronic device, the electronic device is enabled to perform the method according to any implementation in the first aspect or the second aspect.

According to a fifth aspect, a computer program product is provided. The computer program product includes computer program code. When the computer program code is run by an electronic device, the electronic device is enabled to perform the method according to any implementation in the first aspect or the second aspect.

### BRIEF DESCRIPTION OF DRAWINGS

FIG. 1 is a schematic diagram of a hardware system applicable to an electronic device of this application;
FIG. 2 is a schematic diagram of an interface for entering a gallery application according to this application;
FIG. 3A is a schematic diagram of an interface for generating a moment video according to this application;
FIG. 3B is a schematic diagram of another interface for generating a moment video according to this application;
FIG. 4 is a schematic diagram of an interface when a moment video cannot be generated according to this application;
FIG. 5 is a schematic diagram of another interface when a moment video cannot be generated according to this application;
FIG. 6A to FIG. 6E are a schematic diagram of another interface for generating a moment video according to this application;
FIG. 7 is a schematic diagram of still another interface for generating a moment video according to this application;
FIG. 8 is a schematic diagram of an interface when a moment video cannot be generated according to this application;
FIG. 9A to FIG. 9E are a schematic diagrams of still another interface for editing a moment video according to this application;
FIG. 10 is a schematic diagram of an interface of a display area for displaying a moment video according to this application;
FIG. 11 is a schematic flowchart of a method for generating a moment video according to this application; and
FIG. 12 is a schematic diagram of a software system applicable to an electronic device of this application.

### DESCRIPTION OF EMBODIMENTS

The following describes technical solutions in embodiments of this application with reference to accompanying drawings.

In embodiments of this application, unless otherwise specified, "a plurality of" may mean two or more.

Embodiments of this application may be applied to an electronic device. A gallery application is installed on the electronic device.

In some embodiments of this application, the electronic device may be a mobile phone, a smart screen, a tablet computer, a wearable electronic device, a vehiclemounted electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like.

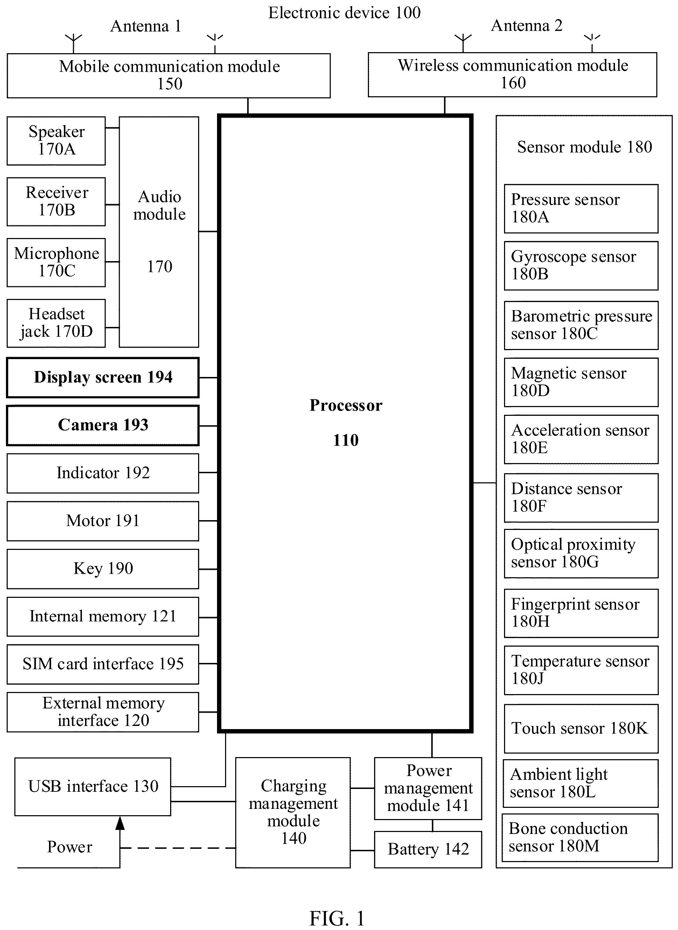

The following uses an example in which the electronic device is a mobile phone. FIG. 1 is a schematic diagram of a structure of an electronic device 100 according to an embodiment of this application. FIG. 1 shows a hardware system applicable to an electronic device of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It should be noted that the structure shown in FIG. 1 does not constitute a specific limitation on the electronic device 100. In some other embodiments of this application, the electronic device 100 may include more or fewer components than the components shown in FIG. 1, the electronic device 100 may include a combination of some of the components shown in FIG. 1, or the electronic device 100 may include subcomponents of some of the components shown in FIG. 1. The components shown in FIG. 1 may be implemented by hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and a neural-network processing unit (neural-network processing unit, NPU). Different processing units may be independent components or integrated components.

The controller may generate an operation control signal based on instruction operation code and a timing signal, to control instruction fetching and instruction execution.

A memory configured to store instructions and data may be further disposed in the processor 110. In some embodiments, the memory in the processor 110 is a cache. The memory may store instructions or data that is recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, and a USB interface. A connection relationship between modules shown in FIG. 1 is only schematically described, and does not constitute a limitation on the connection relationship between the modules of the electronic device 100. Optionally, the modules of the electronic device 100 may alternatively use a combination of a plurality of connection manners in the foregoing embodiment.

The electronic device 100 may implement a display function by using the GPU, the display screen 194, and the application processor. The GPU is a microprocessor for image processing and is connected to the display screen 194 and the application processor. The GPU is configured to perform mathematical and geometric calculation for graphics rendering. The processor 110 may include one or more GPUs that execute program instructions to generate or change display information.

The display screen 194 may be configured to display an image or a video. The display screen 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or a quantum dot light emitting diode (quantum dot light emitting diodes, QLED). In some embodiments, the electronic device 100 may include 1 or N display screens 194. N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, so that the ISP converts the electrical signal into an image visible to naked eyes. The ISP may perform algorithm optimization on noise, brightness, and a color of the image, and the ISP may further optimize a parameter such as exposure and a color temperature of a photographing scene. In some embodiments, the ISP may be disposed in the camera 193.

The camera 193 is configured to capture a still image or a video. An optical image of an object generated through a lens is projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP. The ISP converts the electrical signal into a digital image signal. The ISP outputs the digital image signal to the DSP for processing. The DSP converts the digital image signal into an image signal in a standard format of red green blue (red green blue, RGB), YUV, or the like. In some embodiments, the electronic device 100 may include 1 or N cameras 193. N is a positive integer greater than 1.

The digital signal processor is configured to process a digital signal. In addition to a digital image signal, the digital signal processor may process another digital signal.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)1, MPEG2, MPEG3, and MPEG4.

The NPU is a processor referring to a biological neural network structure. For example, by referring to a mode of transmission between human brain neurons, the NPU quickly processes input information, and can further continuously perform selflearning. The NPU may be configured to implement a function like intelligent cognition of the electronic device 100, for example, image recognition, face recognition, voice recognition, and text understanding.

The external memory interface 120 may be configured to be connected to an external storage card, for example, a secure digital (secure digital, SD) card, to expand a storage capacity of the electronic device 100.

The internal memory 121 may be configured to store computer-executable program code. The executable program code includes instructions. The internal memory 121 may include a program storage area and a data storage area. The program storage area may store an operating system and an application needed by at least one function (for example, a voice playback function and an image playback function). The data storage area may store data (for example, audio data and a phone book) created during use of the electronic device 100. In addition, the internal memory 121 may include a high-speed random access memory, and may further include a non-volatile memory, for example, at least one magnetic disk storage device, a flash memory, and a universal flash storage (universal flash storage, UFS). The processor 110 performs various processing methods of the electronic device 100 by running instructions stored in the internal memory 121 and/or instructions stored in the memory disposed in the processor.

The electronic device 100 may implement an audio function, for example, music playback and recording, by using the audio module 170, the speaker 170A, the receiver 170B, the microphone 170C, the headset jack 170D, the application processor, and the like.

The touch sensor 180K is also referred to as a touch component. The touch sensor 180K may be disposed on the display screen 194. The touch sensor 180K and the display screen 194 form a touchscreen, and the touchscreen is also referred to as a touch control screen. The touch sensor 180K is configured to detect a touch operation performed on or near the touch sensor 180K. The touch sensor 180K may transmit the detected touch operation to the application processor, to determine a touch event type. A visual output related to the touch operation may be provided on the display screen 194. In some other embodiments, the touch sensor 180K may alternatively be disposed on a surface of the electronic device 100 and disposed at a position different from the display screen 194.

The key 190 includes a power-on key and a volume key. The key 190 may be a mechanical key or a touch key. The electronic device 100 may receive a key input signal to implement a function related to the key input signal.

The technical solutions described in the following embodiments can all be implemented in the electronic device 100 having the foregoing hardware architecture.

For ease of understanding, in the following embodiments of this application, a video recording method provided in embodiments of this application is described in detail with reference to drawings and application scenarios by using an electronic device with the structure shown in FIG. 1 as an example.

This application describes in detail a video processing method provided in this application by using an example in which the electronic device is a mobile phone and a camera application and a gallery application is installed on the mobile phone.

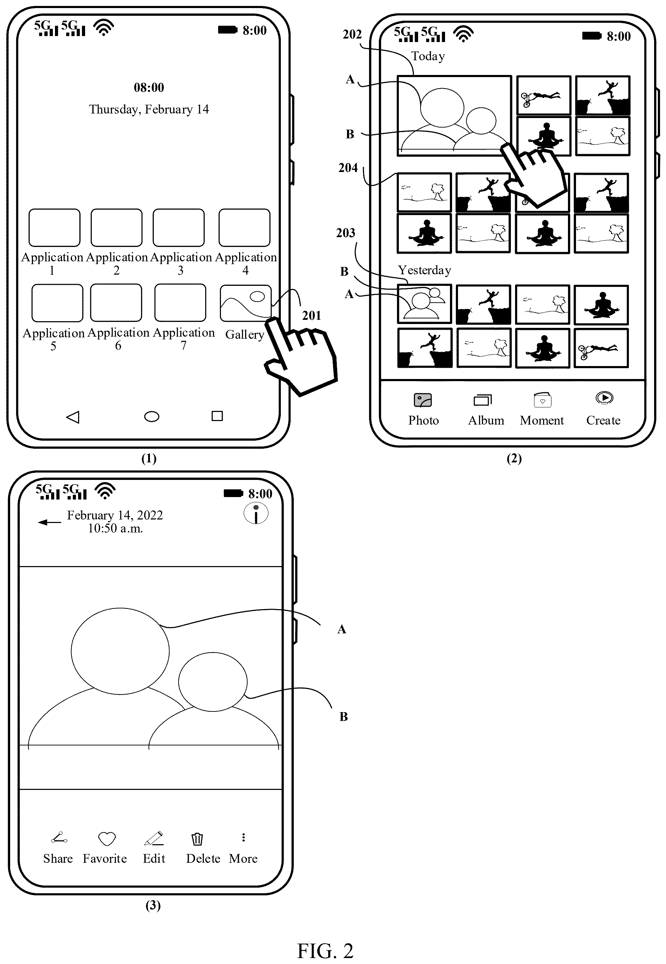

The following describes an application scenario of an embodiment of this application with reference to FIG. 2. FIG. 2 is a schematic diagram of a graphical user interface (graphical user interface, GUI) according to an embodiment of this application.

For example, as shown in (1) in FIG. 2, a screen display system of the mobile phone displays currently output interface content. The interface content includes a plurality of applications (applications, Apps). A user may tap a "Gallery" application icon 201 on a home screen of the mobile phone. The mobile phone opens a gallery application in response to an operation of the user tapping the "Gallery" application icon 201, and the mobile phone displays an interface of the gallery application shown in (2) in FIG. 2.

For another example, the user may input a voice instruction in a voice control manner. In response to the voice instruction input by the user, the mobile phone opens the gallery application based on content recognized in the voice instruction, and may also display the interface shown in (2) in FIG. 2.

For another example, when another application runs on the mobile phone and the gallery application runs in the background, the user may alternatively enter the gallery application through a multi-task interface. A manner for entering the gallery application is not specifically limited in this embodiment of this application.

As shown in (2) in FIG. 2, the interface of the gallery application includes different types of tab pages, which are respectively: a photo page, an album page, a moment page, and a creation page (or named a discovery page). The interface of the gallery application displays the photo page by default. The photo page is used for displaying all photos photographed or saved by the user. The album page is used for displaying albums corresponding to photos saved by category. The moment page is used for displaying a generated moment video. The creation page is used for freely creating or collaging photos based on photos selected by the user.

(2) in FIG. 2 shows an interface of the photo page. The interface includes thumbnails of a plurality of photos, for example, a thumbnail of a photo 202, a thumbnail of a photo 203, and a thumbnail of a photo 204. The photo 202 and the photo 203 include portraits, and the photo 204 is a landscape photo and does not include a portrait. For a thumbnail of any photo on the interface, the mobile phone displays a full image of the photo in response to an operation of the user tapping the thumbnail of the photo.

When the user taps the photo 202 shown in (2) in FIG. 2, the photo 202 may be viewed in a full image, and an interface of the mobile phone is displayed as an interface shown in (3) in FIG. 2. The photo 202 includes two portraits. The interface shown in (3) in FIG. 2 includes options such as Share, Favorite, Edit, Delete, and More. If the user taps Share, the photo 202 may be shared. If the user taps Favorite, the photo 202 may be collected to a folder. If the user taps Edit, the photo 202 may be edited. If the user taps Delete, the photo 202 may be deleted. If the user taps More, another operation function (for example, Move, Copy, Add notes, Hide, or Rename) on the photo 202 may be performed. The interface shown in (3) in FIG. 2 further includes time information and a return control. The time information is used for displaying photographing time of the photo 202. If the user taps the return control, the interface shown in (2) in FIG. 2 is returned to.

It should be understood that an example in which a photo shown in (3) in FIG. 2 includes two portraits is merely used for description herein, and this embodiment of this application is not limited thereto. Actually, the photo may include one or more than two portraits.

When the user views a specific photo (like the photo 202) including a portrait, the user expects to view a historical photo related to the portrait. However, in the related technology, the user cannot view, or needs to return to a main interface of the gallery application, enter the album page or another page, find information of a character tag, find a related character based on the character tag, and can view a photo related to the character. This is inconvenient.

This application provides an interaction method. To recommend photos related to the portrait to the user and generate a moment video, an entry of a "Generate moments" function is added to the gallery application in this embodiment of this application. The mobile phone can actively generate a moment video of a target portrait for the user by using the entry. This is easy to operate.

An embodiment of this application provides a plurality of entries of the "Generate moments" function.

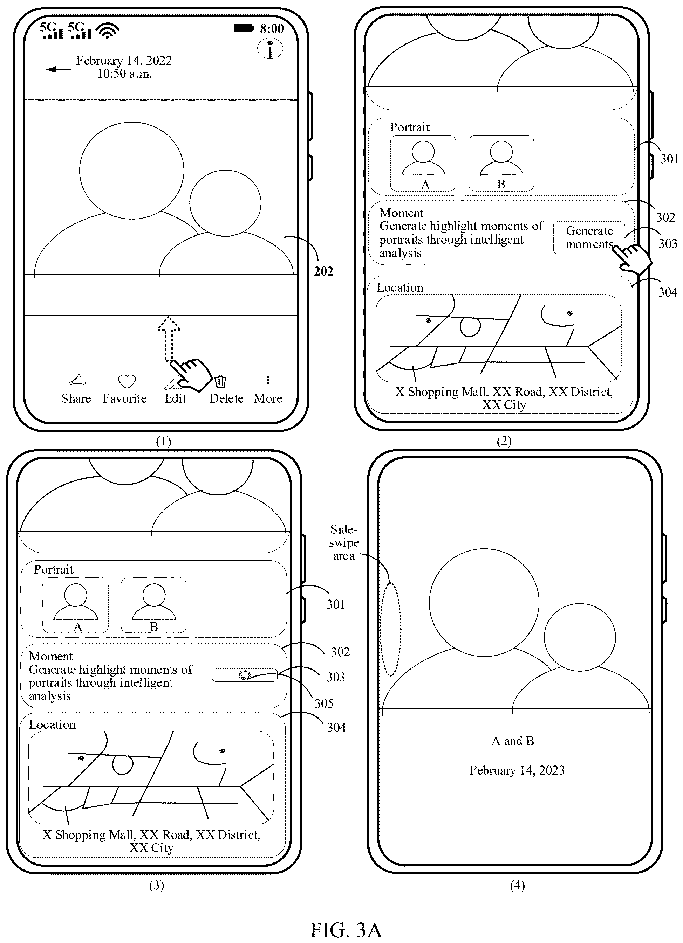

In a possible implementation, when the user views a full image of a picture in the gallery, and the full image includes a portrait, the mobile phone displays an entry of a "Generate moments" function below the picture in response to an operation of the user swiping upward on the picture. The following describes a first entry of a "Generate moments" function with reference to FIG. 3A to FIG. 5.

FIG. 3A is an example diagram of a GUI for generating a moment video according to an embodiment of this application. An interface shown in (1) in FIG. 3A is an interface of a gallery application, and the interface includes a full image of a specific photo (for example, the photo 202). The photo includes two portraits. The user performs an upward swiping operation on the interface. The mobile phone may display an interface shown in (2) in FIG. 3A in response to the upward swiping operation of the user, and may enter an entry of a "Generate moments" function. For example, the user swipes upward on a screen in a dashed-line arrow area shown in (1) in FIG. 3A, and the interface shown in (2) in FIG. 3A is displayed. The interface shown in (2) in FIG. 3A may be understood as an upward swiping page of the full image of the photo.

As shown in (2) in FIG. 3A, the interface includes a part of content or a part of area of the photo 202, a widget 301, a widget 302, and a widget 304. The widget 301 is used for displaying a portrait or a character tag icon included in the photo. If the user taps a specific character tag icon, the mobile phone may display a photo related to the character tag icon (or display a cluster of the character tag icon).

For example, portraits displayed on the widget 301 are respectively a tag icon of "A" and a tag icon of "B". The widget 302 is used for displaying an entry of a control 303 of a "Generate moments" function. In addition, the widget 302 may further include other prompt information, to prompt the user with the "Generate moments" function. For example, prompt content is "Generate highlight moments of portraits through intelligent analysis". The widget 304 is used for displaying a location of the photo in a map format, for example, a geographical location of the photo where the photo is photographed.

It should be noted that a name of a portrait may be added by the user in advance. For a portrait having no name, when a thumbnail of the portrait is displayed on the widget 301, content correspondingly displayed below the thumbnail of the portrait may be "Unnamed", "No name added", or the like.

Further, for a portrait having no name, the mobile phone may add a name to the portrait in response to an operation of the user tapping the portrait on the widget 301. For example, the mobile phone pops up a window on an interface in response to an operation of the user tapping "No portrait name" on the widget 301, and the window includes an input field. The portrait is named in response to an operation of the user entering a name in the input field.

For example, the control 303 may be a button. After the user taps the control 303, in response to an operation of the user tapping the control 303, the mobile phone analyzes data in a gallery, searches for a plurality of photos that include both a portrait A and a portrait B (or a group photo of the portrait A and the portrait B), and generates a moment video by using the plurality of photos that include both the portrait A and the portrait B.

For example, an interface of the generated moment video is displayed as shown in (4) in FIG. 3A. As shown in (4) in FIG. 3A, a cover of the generated moment video, or a moment playback page is displayed in an immersive view. Immersive display means a display mode in which an image fills an entire screen of the mobile phone. The cover of the generated video includes caption information and time information. The caption information may be generated based on a photo. For example, a caption of the photo may be generated by using a name corresponding to a portrait or a name of a photographing location. Alternatively, optionally, the caption information is words intelligently matched or intelligently generated based on photo content (or image information). The time information means time of a generation moment. In some embodiments, the caption information and the time information are displayed only on a 1^{st} image frame when the generated moment video is played back. In other words, when the "moment video of A and B" is dynamically played back, the caption information and the time information are no longer displayed on another image frame. Dynamically playing back the "moment video of A and B" may be understood as sequentially playing back, according to a time order (for example, a time order from earliest to latest), photos used in the generated video.

It should be noted that, for a portrait having no name, after a moment video of the portrait is generated, caption information of the moment video may be added on the moment video with other words, for example, "Silhouette" and "This person's moment".

It may be understood that an interface shown in(4) in FIG. 3A is merely display of the 1^{st} image frame of the generated moment video of the portrait A and the portrait B, and the interface does not remain all the time. In addition, in a subsequent playback process, the caption information and the time information may not be displayed on another image frame.

It should be further noted that (1) in FIG. 3A is described by using an example in which a photo includes a portrait. In other words, when the portrait is detected, only in response to an upward swiping operation of the user, an interface in (2) in FIG. 3A that is displayed by the mobile phone includes a moment widget, and further includes an entry or a button (such as the control 303) of the "Generate moments" function. However, if the portrait is not detected, the entry of the "Generate moments" function is not displayed to the user.

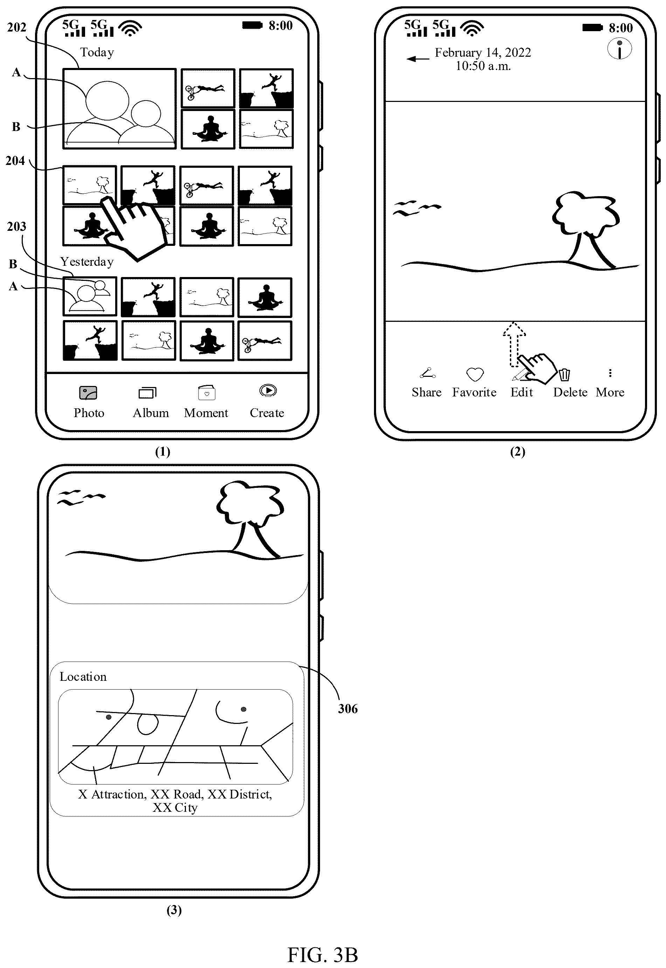

A case in which a photo viewed by the user does not include a portrait is described below with reference to FIG. 3B. FIG. 3B is an example diagram of another GUI for generating a moment video according to an embodiment of this application. An interface shown in (1) in FIG. 3B includes the thumbnail of the photo 204, and the photo 204 is a landscape photo. The photo 204 does not include a portrait. If the user taps the thumbnail of the photo 204 in (1) in FIG. 3B, in response to an operation of the user tapping the thumbnail of the photo 204, the mobile phone displays a full image of the photo 204, for example, an interface shown in (2) in FIG. 3B. In response to an upward swiping operation of the user on a display interface of the full image of the photo 204, the mobile phone displays an interface shown in (3) in FIG. 3B. As shown in (3) in FIG. 3B, the interface includes a widget 306, and the widget 306 is used for displaying photographing location information of the photo 204. In addition, the interface shown in (3) in FIG. 3B does not include a moment widget, or does not include an entry or a button (such as the control 303) of the "Generate moments" function, but may include photographing location information of a photo.

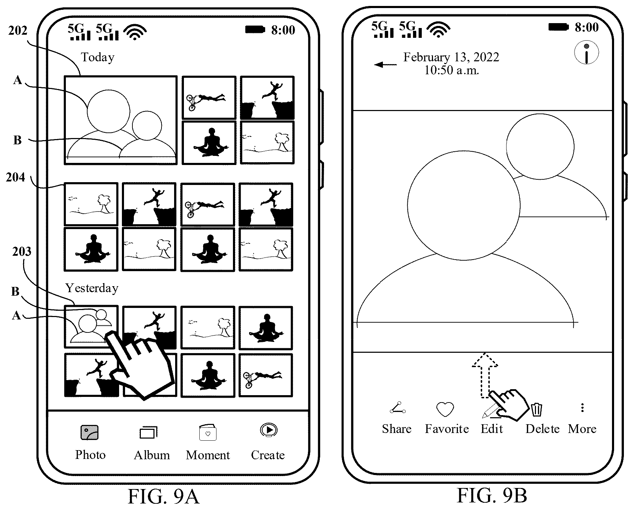

In addition, the foregoing uses an example in which the moment video corresponding to the photo shown in (1) in FIG. 3A is not generated for description. If the photo shown in (1) in FIG. 3A has been actively clustered with another photo to generate a moment video, after the upward swiping operation is performed, an interface shown in FIG. 9A is displayed.

In some embodiments, if time needed for generating a moment video is short, or a generation speed is fast, after the user taps the "Generate moments" function, "Display a cover of a generated moment video in an immersive view" may be directly jumped to. If time needed for generating a moment video is long, or a generation speed is slow, a loading status may be displayed on the widget 302 while the user is waiting. For example, in an interface shown in (3) in FIG. 3A, a dynamic icon 305 displayed in the control 303 is used for representing that a moment video is currently being loaded.

It may be understood that a loading pattern shown by the dynamic icon 305 is merely example description. During waiting for generation of a moment video, the dynamic icon 305 may dynamically change (for example, by rotating in a circle). The user may know that a moment video is being generated currently through the dynamic icon 305.

In other words, after the user taps the control 303, an interface shown in (4) in FIG. 3A may be directly jumped to. Alternatively, the interface shown in (3) in FIG. 3A may be first displayed, and after the moment video is generated, the interface shown in (4) in FIG. 3A is automatically jumped to.

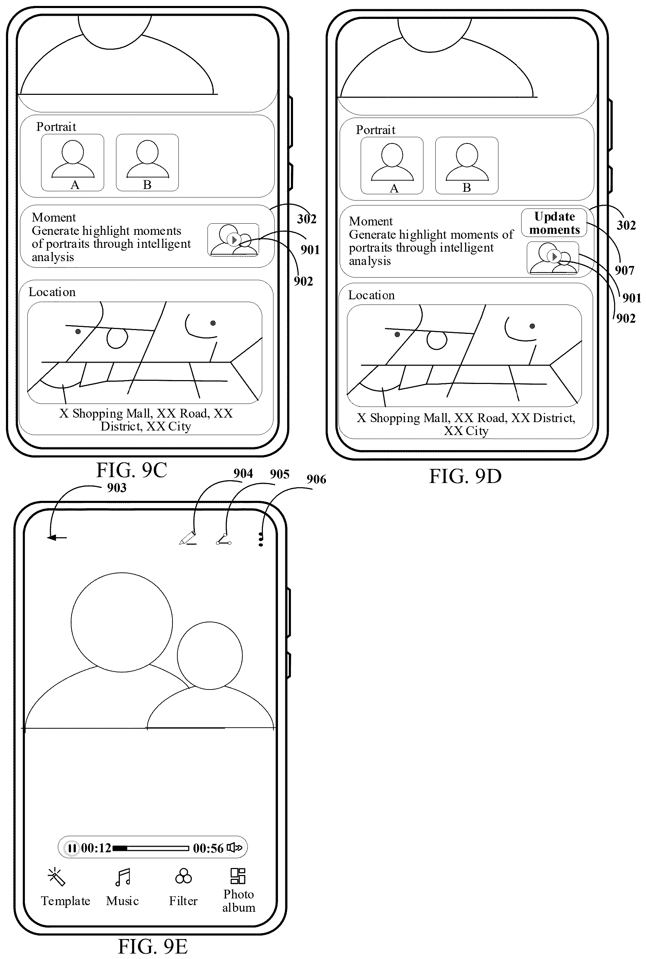

In addition, after the moment video is generated, content included in the widget 302 on a full image upward swiping page of a photo is updated accordingly. Optionally, when the user performs a sideward swiping operation in a side-swipe area shown in (4) in FIG. 3A, the upward swiping page of the full image may be returned to. In this case, content included in the widget 302 on the upward swiping page of the full image is updated accordingly. In other words, a generated moment video is synchronously updated to an upward swiping page of a full image of a corresponding photo, and is displayed in a thumbnail manner. For example, an interface shown in FIG. 9C is displayed. In other words, the widget 302 includes a thumbnail 901 of the generated moment video.

It should be understood that the side-swipe area shown in (4) in FIG. 3A is located in a right side edge area of the screen, the side-swipe area is merely example description, and this embodiment of this application is not limited thereto. For example, the side-swipe area may alternatively be located in a left side edge area of the screen.

In some embodiments, during generation of a moment video, when the user exits an application to enter another application, assuming that a procedure of the gallery application is interrupted (for example, the procedure of the gallery application is cleared or closed, or the mobile phone stops running the procedure of the gallery application in response to an operation of the user closing the procedure of the gallery application), a process of generating the moment video is interrupted, in other words, a photo analysis process is no longer performed. Assuming that the procedure of the gallery application is not cleared, when the user enters the gallery application again, in response to an operation of the user opening the gallery application again, content displayed on an interface by the mobile phone depends on whether a moment video is generated. This process specifically includes: If the moment video has been generated, a playback page (for example, the interface shown in (4) in FIG. 3A) of the moment video is displayed. If the moment video is still in a loading process, the loading status (for example, the interface shown in (3) in FIG. 3A) of the moment video is displayed.

It should be noted that, during generation of the moment video, the process of generating the moment video cannot be interrupted. For example, when the interface shown in (3) in FIG. 3A is displayed, the user cannot exit from a loading interface to view another photo. However, the gallery application may be put into the background to run. After the gallery application is put into the background, the gallery application still performs the process of generating the moment. In this way, when the user enters the gallery application again, if the moment video is generated, in response to an operation of the user tapping the gallery application again, the mobile phone displays the playback page (for example, the interface shown in (4) in FIG.3A) of the moment video.

When a moment video is generated based on a currently viewed photo, in some cases, a moment video cannot be generated. The moment video cannot be generated for the following reasons. Because a quantity of photos included in the gallery is limited, a quantity of related portrait photos is small or there is no related portrait photo, a quantity of portraits included in a currently viewed photo exceeds a preset threshold, and exceeds an analysis capability of the gallery application, or the photo 202 is a photo just photographed by the user, for example, after photographing the photo 202 in the camera application, the user can directly enter the interface shown in (3) in FIG. 2 from a gallery entry of a camera interface. Regardless of the reason, a prompt may be sent to the user through prompt information.

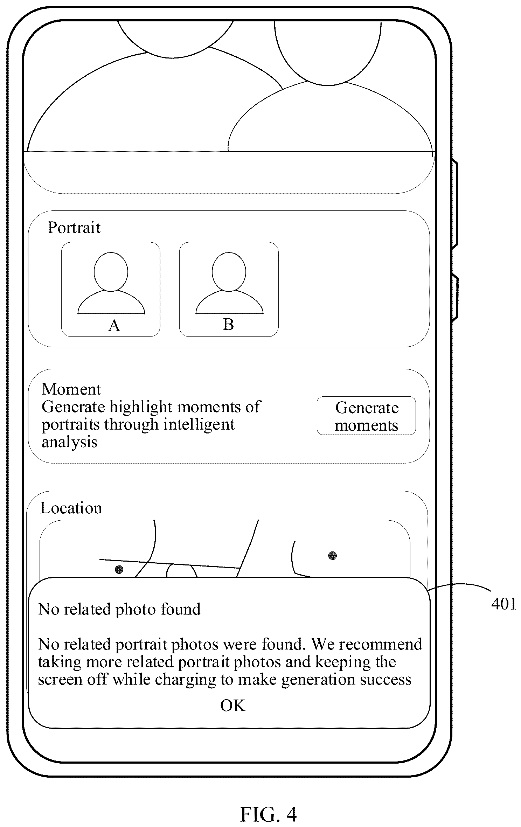

For example, FIG. 4 is an example diagram of a prompt window when a moment video cannot be generated. When the user taps the control 303 shown in (2) in FIG. 3A, assuming that in addition to the photo 202 that the user currently views, no other photo that includes both the portrait A and the portrait B is found in the gallery application, the mobile phone displays an interface shown in FIG. 4 in response to an operation of the user tapping the control 303. The interface includes a window 401. The user is prompted, through the window 401, that no related photo is found. Content of a text prompt included in the window 401 is "No related portrait photos were found. We recommend taking more related portrait photos and keeping the screen off while charging to make generation success". Optionally, the window 401 further includes an "OK" option. After the user taps the "OK" option in the window 401, in response to an operation of the user tapping the "OK" option, the mobile phone no longer displays the window 401, in other words, the window 401 displayed on the interface disappears. Alternatively, the user does not perform any operation after seeing the window 401, and the mobile phone no longer displays the window 401 after preset duration, in other words, the window 401 displayed on the interface automatically disappears.

In some embodiments, if a photo viewed by the user includes too many portraits, which exceeds the analysis capability of the gallery application, and in response to the user tapping the function of generating a moment, the gallery application cannot generate a moment video including more than a preset quantity of portraits, in this case, prompt information may also be displayed to the user. For example, the photo viewed by the user is a group photo with a plurality of persons, in other words, there are a plurality of portraits in the group photo.

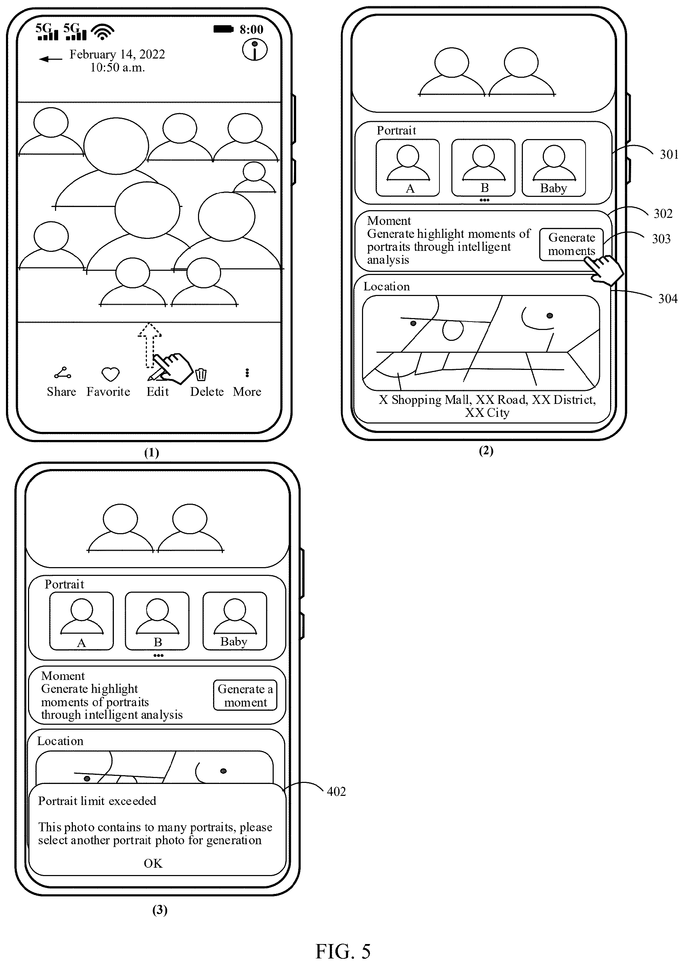

FIG. 5 is another example diagram of a prompt window when a moment video cannot be generated. In an interface as shown in (1) in FIG. 5, a photo viewed by the user include 10 portraits. After the user swipes upward on a screen, an interface shown in (2) in FIG. 5 is displayed. In the interface shown in (2) in FIG. 5, the widget 301 sequentially displays 10 recognized portraits (due to size limitation, only some portraits are shown in the figure). A manner for displaying the 10 portraits on the widget 301 is not specifically limited in this embodiment of this application. For example, only thumbnails of three portraits in thumbnails of the 10 portraits are displayed on the widget 301. The mobile phone displays thumbnails of other portraits on the widget 301 in response to a swiping operation on the screen (swiping leftward on the screen or swiping rightward on the screen) of the user on the widget 301. For another example, the thumbnails of the 10 portraits may be entirely displayed on the widget 301.

For functions of the widget 302 and the widget 304, refer to the descriptions in FIG. 3A. Details are not described herein again. When the user taps the control 303 on the widget 302 shown in (2) in FIG. 5, an interface shown in (3) in FIG. 5 is displayed.

It is assumed that an upper limit of a quantity of portraits is 10. Because the quantity of portraits in the photo shown in (1) in FIG. 5 is 10, and reaches the upper limit, the mobile phone displays the interface shown in (3) in FIG. 5. The interface includes a window 402, and the window 402 is used for prompting the user with a reason why a moment video cannot be generated. For example, content in the window 402 is "Portrait limit exceeded. This photo contains to many portraits, please select another portrait for generation".

It should be understood that the foregoing upper limit quantity is merely example description. The upper limit of the quantity of portraits is not specifically limited in this embodiment of this application. The upper limit quantity may be a reasonable value set based on an actual requirement.

Optionally, the window 402 further includes an "OK" option. For a disappearance mechanism of the window 402, refer to the descriptions of the window 401. Details are not described herein again.

In some embodiments, for a plurality of photos just photographed, if the mobile phone does not turn off a screen the whole time from a moment at which photographing is completed to a moment at which the user taps to view the photo just photographed, in response to an operation of the user tapping one of the plurality of photos, the mobile phone displays a full image of the photo. In response to an upward swiping operation of the user on a full image interface (with reference to the interface shown in (1) in FIG. 3A), the mobile phone displays an entry (with reference to the interface shown in (2) in FIG. 3A) for generating a moment. A moment video of a portrait is generated in response to the user tapping the entry for generating a moment.

In other words, in response to a photographing operation of the user, the mobile phone continuously photographs a plurality of portrait photos (for example, a portrait Z) within a period of time. For a photo viewed by the user in a full image, in response to an upward swiping operation of the user on an interface of the full image of the photo (with reference to the interface shown in (1) in FIG. 3A), the mobile phone displays an entry (with reference to the interface shown in (2) in FIG. 3A) for generating a moment. A moment video of the portrait Z is generated in response to the user tapping the entry for generating a moment. In addition, because the screen is not off, and the gallery application does not perform an analysis operation on these continuously photographed photos, when generating the moment video, the mobile phone may generate the moment video by using photos of the portrait Z in the gallery application. However, in addition to a photo currently viewed in the plurality of continuously photographed portrait photos, even if another photo is the photo of the portrait Z, the another photo cannot be used for generating a moment video.

The first entry of the "Generate moments" function is described above with reference to FIG. 3A to FIG. 5. An embodiment of this application further provides another function entry for generating a moment. The entry of the "Generate moments" function is located on a moment page in a gallery application.

In some embodiments, the function entry for generating a moment video is added to the moment page in the gallery application. A difference from the function entry for generating a moment video when viewing a photo lies in that: After the function entry for generating a moment video on the moment page is tapped, a portrait further needs to be selected, to determine which portrait a generated moment video is related to. When the moment video is generated when the photo is viewed, the gallery application may automatically recognize a portrait based on the photo viewed by the user, and generate a related moment video based on the recognized portrait.

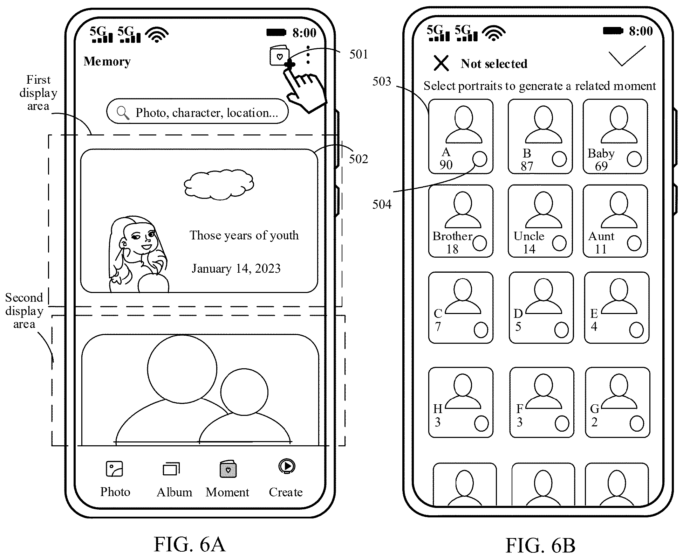

The following describes, with reference to FIG. 6A to FIG. 8, an embodiment in which the function entry for generating a moment video is added to the moment page in the gallery application.

In FIG. 6A shows the moment page of the gallery application. For example, the user switches from a photo page to the moment page by tapping a "Moment" control in (2) in FIG. 2, to display an interface shown in FIG. 6A. As shown in FIG. 6A, the interface includes a control 501, a first display area, a second display area, and a search bar. The control 501 is a function entry for generating a moment video. The first display area is used for displaying a widget of a moment video latest generated, for example, a widget 502 is a moment video generated on January 14, 2023. The second display area is used for displaying a widget of a moment video generated at another time (for example, time later than January 14, 2023). The widget of the generated moment video in this embodiment of this application may be displayed in the first display area or the second display area. A specific display area in which the widget of the generated moment video depends on time when the moment video is generated. If the moment video is latest generated, the video may be displayed in the first display area. If the moment video is not latest generated, the video is not displayed in the first display area. The search bar is used for the user to enter search content (including but not limited to a photo, a figure, a place, and the like), to search for an expected photo or video based on the search content.

For example, the control 501 may be located at an upper right corner of the moment page. It should be understood that a location of the control 501 on the moment page shown in FIG. 6A is merely example description, and this embodiment of this application is not limited thereto.

After the user taps the control 501, in response to an operation of the user tapping the control 501, the mobile phone displays an interface for selecting a portrait, so that the user selects an expected portrait to generate a memory video. As shown in FIG. 6B, an interface displays data of all portraits analyzed by the gallery application. Data of each portrait includes a quantity of photos corresponding to the portrait. For a portrait to which a name has been added by the user, portrait data further includes a name or a designation corresponding to the portrait. For a portrait to which a name is not added by the user, portrait data does not include a name or a designation, but prompt text "Add name" may be displayed on a portrait widget, to guide the user to name the portrait. A portrait 503 is used as an example for description, the portrait 503 includes: a portrait name (A), a quantity of photos related to a portrait A (90), and a check option 504. A photo related to A may be understood as: a photo in which the portrait A appears, for example, a group photo of the portrait A and another person, or a personal photo of the portrait A. The check option 504 is used for displaying a status indicating whether the portrait is selected by the user. After the user taps the check option 504, it indicates that the portrait 503 is selected.

Optionally, as shown in FIG. 6B, a plurality of pieces of portrait data may be sorted in descending order of quantities. Alternatively, the plurality of pieces of portrait data may alternatively be sorted based on another factor, for example, an intimacy relationship with an owner and an appearance frequency. This is not specifically limited.

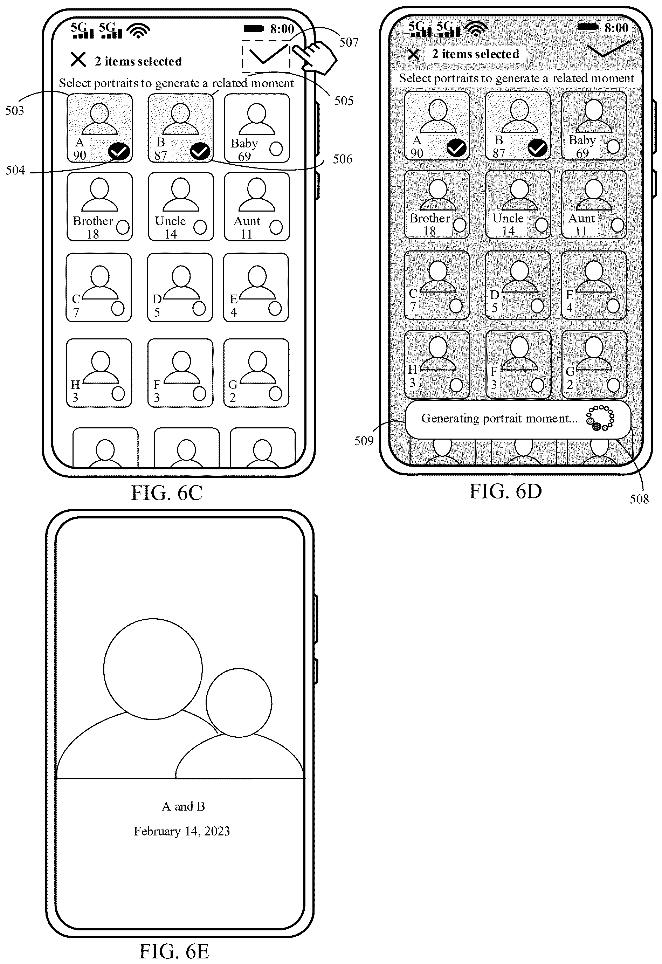

For example, after the user selects the portrait 503 and a portrait 505, the mobile phone displays an interface shown in FIG. 6C in response to an operation of the user tapping the check option 504 and a check option 506. As shown in FIG. 6C, the check option 504 of the portrait 503 and the check option 506 of the portrait 505 are in a selected state. In addition, prompt content "2 items selected" is further displayed on the interface. After the user completes portrait selection, the mobile phone responds to an operation of the user tapping an icon 507, and the gallery application starts to analyze photo data, to generate a moment video.

Similarly, for a case in which the user generates a moment video by selecting a portrait, if time needed for generating the moment video is short, or a generation speed is fast, after the user taps the icon 507, in response to an operation of the user tapping the icon 507, the mobile phone may directly jump to the foregoing "Display a cover of a generated moment video in an immersive view", for example, an interface shown in FIG. 6E. If time needed for generating a moment video is long, or a generation speed is slow, a loading status may be displayed through a window while the user is waiting. For example, in an interface shown in FIG. 6D, a dynamic icon 508 displayed in a window 509 is used for representing that a moment video is currently being loaded. The window 509 may further display text "Generating portrait moment...", to prompt the user that the portrait moment is currently being loaded. It may be understood that the dynamic icon 508 is similar to the dynamic icon 305 described above, and a meaning of the dynamic icon 508 is not described herein again. The interface shown in FIG. 6E is similar to the interface shown in (4) in FIG. 3A. Content on the interface is not described herein again.

Optionally, in response to a sideward swiping operation (a leftward swiping operation or a rightward swiping operation) of the user on the interface shown in FIG. 6E, an interface of the moment page, for example, the interface shown in FIG. 6A, may be returned to. In addition, if the generated moment video in FIG. 6E is latest generated, on the interface shown in FIG. 6A, the moment video is displayed in a top display area (the first display area). If the generated moment video in FIG. 6E is a video obtained by updating a generated moment video, on the interface shown in FIG. 6A, the moment video is displayed in a corresponding display area (that is, a display area in which the generated moment video is originally located).

A manner in which the user generates the moment video through which function entry is not specifically limited in this embodiment of this application. It should be noted that, when the user selects a portrait, if the selected portrait is already in a generated related moment video, the moment video may be updated based on the portrait selected this time.

For example, a moment video of "A and B" has been generated in a portrait selection manner shown in FIG. 6 A to FIG. 6E. After a period of time (for example, one day, one month, or three months), the user enters the portrait selection interface shown in FIG. 6 A to FIG. 6E again, and selects the portraits "A" and "B" again. In response to an operation of the user selecting the portraits "A" and "B" again after a period of time, the mobile phone performs analysis again based on gallery data, and updates the generated moment video of "A and B", to obtain an updated moment video of "A and B".

For another example, a moment video of "A and B" has been generated in a manner of generating the moment video shown in FIG. 3A (to be specific, when a portrait is viewed, a moment video is triggered of generation). The user further selects the portraits "A" and "B" in the portrait selection manner shown in FIG. 6 A to FIG. 6E. In this case, analysis may also be performed based on gallery data, to update the generated moment video of "A and B", to obtain an updated moment video of "A and B".

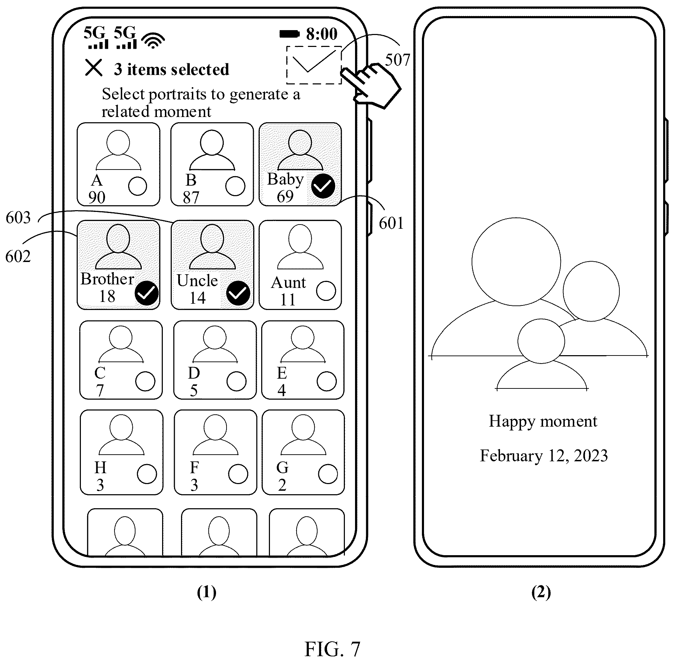

Certainly, when the user selects a portrait to generate a moment video, if the selected portrait is different from the previous one, or a moment video of the selected portrait is not generated previously, a corresponding moment video is generated based on the portrait selected by the user. For example, in an interface shown in (1) in FIG. 7, after the user selects a portrait 601, a portrait 602, and a portrait 603, the user taps the icon 507. The mobile phone generates a moment video of the portrait 601, the portrait 602, and the portrait 603 in response to an operation of the user tapping the icon 507. The moment video of the portrait 601, the portrait 602, and the portrait 603 is displayed as an interface shown in (2) in FIG. 7. As shown in (2) in FIG. 7, a cover of the moment video generated by the mobile phone based on the portrait 601, the portrait 602, and the portrait 603 includes characters corresponding to the portrait 601, the portrait 602, and the portrait 603. Similarly, during selection of a portrait to generate a moment video, there may be a case in which a moment video cannot be generated. In this case, the user may be prompted through a prompt window.

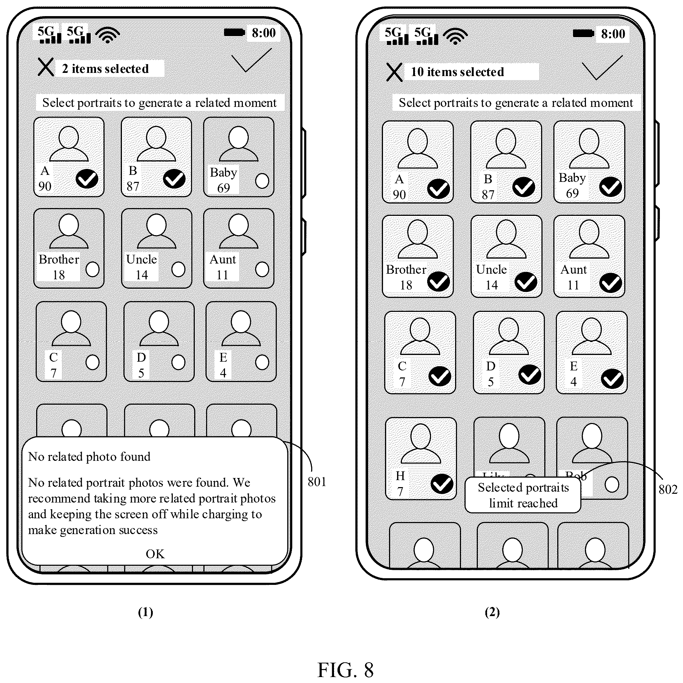

In some embodiments, when a quantity of portraits selected by the user is insufficient, the gallery application cannot generate a corresponding moment video. For example, the mobile phone displays an interface shown in (1) in FIG. 8 in response to an operation of the user selecting the portrait A and the portrait B. The interface includes a window 801. A prompt is sent to the user through the window 801. Content in the window 801 is similar to the content in the window 401. For brevity, details are not described herein again.

In some embodiments, when a quantity of portraits selected by the user exceeds a preset threshold, the gallery application cannot generate a corresponding moment video. For example, when the quantity of portraits selected by the user is 10, the mobile phone displays an interface shown in (2) in FIG. 8 in response to an operation of the user selecting the 10 portraits. The interface includes a window 802. A prompt is sent to the user through the window 802. Content in the window 802 is similar to the content in the window 402. For brevity, details are not described herein again.

Two entries for generating a moment video are provided above. After the moment video is generated, when the user opens a full image page of a photo included in the moment video, a displayed interface includes the moment video in response to an upward swiping operation of the user on the full image page.

FIG. 9 A to FIG. 9E are an example diagram of another GUI interface according to embodiments of this application. As shown in FIG. 9A, an interface includes a thumbnail of a photo 203. The photo 203 and a photo 202 include a same portrait. For example, the photo 203 and the photo 202 are both group photos of a portrait A and a portrait B. The mobile phone displays an interface shown in FIG. 9B in response to the user tapping the photo 203 shown in FIG. 9A. The interface includes a full image of the photo 203. It may be understood that the interface shown in FIG. 9B may further include other controls, such as Share, Favorite, Edit, Delete, and More. Related explanations about the controls are described above, and are not described herein again.

For example, after a video corresponding to the portrait A and the portrait B in the photo 202 has been generated based on the interface in FIG. 3A, on the interface shown in FIG. 9B, the user swipes upward on a screen in a dashed-line arrow area. The mobile phone displays an interface as shown in FIG. 9C in response to an upward swiping operation of the user on a viewing page of the full image of the photo 203. As shown in FIG. 9C, the interface includes a widget 302. The widget 302 displays a thumbnail 901, that is, a moment video widget of "A and B".

The thumbnail 901 includes a playback control 902. After the user taps the playback control 902, the mobile phone displays a playback interface of the moment video of "A and B" in response to an operation of the user tapping the playback control 902, so that the user enters immersive widget playback. The immersive widget playback is a playback mode in which an image fills an entire screen. It may be seen that, on an interface shown in FIG. 9E, an image fills an entire screen of the mobile phone.

Optionally, in some embodiments, the mobile phone displays an interface shown in FIG. 9D in response to an operation of the user swiping upward on a screen in FIG. 9B. As shown in FIG. 9D, the interface includes a widget 302. The widget 302 not only includes a thumbnail 901 and a playback control 902, but also may include an update control 907. The mobile phone updates a generated moment video of "A and B" in response to an operation of the user tapping the update control 907.

As shown in FIG. 9E, the interface includes a control 903, a control 904, a control 905, a control 906, a playback progress bar, and the like. The control 903 is a return control. When the user taps the control 903, the mobile phone returns to an interface shown in FIG. 9C or an interface shown in FIG. 9D in response to an operation of the user taping the control 903. The control 904 is used for providing an editing operation to the user. The control 905 is a sharing control. When the user taps the control 905, the mobile phone displays a sharing interface in response to an operation of the user taping the control 905. The control 906 is a more information control. When the user taps the control 906, in response to an operation of the user tapping the control 906, the mobile phone displays a detailed information interface of the moment video for the user to view. The playback progress bar may also be referred to as a slider bar. The user may adjust a playback progress by dragging the slide bar. For example, a video is currently played to the 12^{th} second, and total duration is 56 seconds.

Optionally, the progress bar further includes a pause control and a horn control. If the user taps the pause control, the mobile phone pauses playback of the video in response to an operation of the user taping the pause control. If the user taps the horn control, the mobile phone mutes playback of the video in response to an operation of the user tapping the horn control.

In addition, a lower position of a screen of the interface shown in FIG. 9E may further include other controls that perform an editing operation on the video, for example, controls such as a template control, a music control, a filter control, and a photo album control. If the user may tap the music control, the mobile phone displays a music option on the interface in response to an operation of the user tapping the music control, allowing selection of a soundtrack for the moment video, for example, soothing, romantic, warm, cozy, or tranquil. If the user taps the template control, the mobile phone displays template options on the interface in response to an operation of the user tapping the template control, so that the user processes the moment video by applying a template. The template may be a template that has a specific style or a theme and that is generated based on content such as a theme, a soundtrack, or a filter. If the user taps the filter control, the mobile phone displays filter options on the interface in response to an operation of the user tapping the filter control, so that the user selects a filter to perform coloration processing on the video. The filter is one of video special effects, and is used for implementing various special effects of the video. If the user taps the photo album control, the mobile phone jumps to an interface in response to an operation of the user tapping the photo album control, and displays all photos used when the video is generated on the interface. The photos may be presented to the user in a grid view.

Optionally, in the moment video generated based on the portrait, a quantity of used photos may be less than or equal to a preset quantity.

It may be understood that duration of the generated moment video is not limited in this embodiment of this application. For example, the generated moment video may be a 20-second highlight video generated based on the portrait, or may be a 1-minute highlight video.

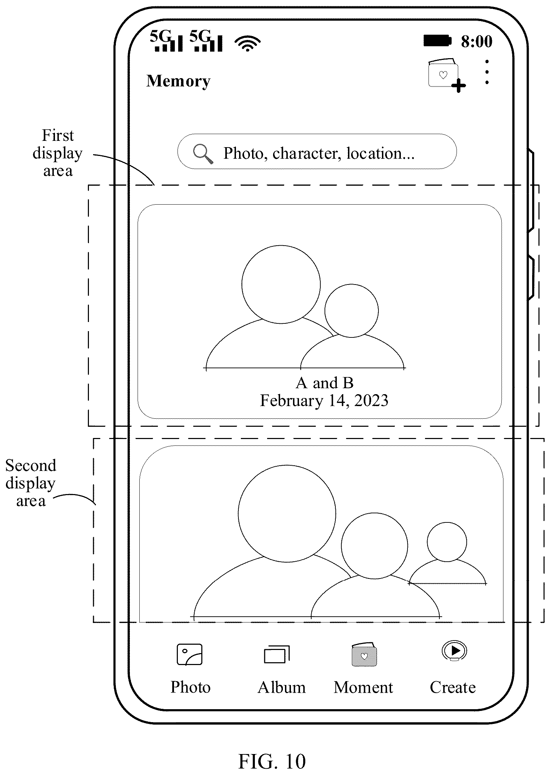

FIG. 10 shows an example of an interface of the moment page in the gallery application. As shown in FIG. 10, a moment video displayed in a first display area and a moment video displayed in a second display area are generated at different moments. The moment video displayed in the first display area is a moment video latest generated. It may be understood that a moment video displayed in a display area is a widget corresponding to the moment video, and a cover of the widget may be a photo having a highest aesthetic score in the moment video.

It should be noted that, for the generated moment video, when the generated moment video is updated, an updated moment video is displayed in a same location of the display area as the moment video before the update. In other words, even if the generated moment video is updated, a display location of the moment video in the display area is not changed.

It may be understood that the examples in FIG. 2 to FIG. 10 are merely convenient for a person skilled in the art to understand, and are not intended to limit the protection scope of embodiments of this application.

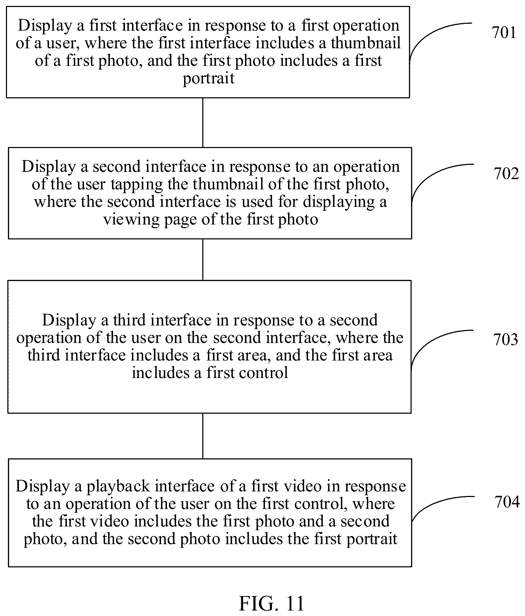

FIG. 11 is a schematic flowchart of a video processing method according to an embodiment of this application. As shown in FIG. 11, the method includes:
Step 701: Display a first interface in response to a first operation of a user, where the first interface includes a thumbnail of a first photo, and the first photo includes a first portrait.

The first operation is an operation of opening a gallery application. For example, on an interface shown in (1) in FIG. 2, the first operation is an operation the user tapping an icon 201.

It should be understood that, in step 701, an example in which that the first photo includes one portrait is recognized is used for description, and this embodiment of this application is not limited thereto. The first photo may include two or more portraits. For example, assuming that the first photo includes two portraits, the first interface is an interface shown in (2) in FIG. 2, and the first photo is a photo 202.

Step 702: Display a second interface in response to an operation of the user tapping the thumbnail of the first photo, where the second interface is used for displaying a viewing page of the first photo.

The second interface is a full image interface displaying the first photo. For example, the second interface may be an interface shown in (3) in FIG. 2.

Step 703: Display a third interface in response to a second operation of the user on the second interface, where the third interface includes a first area, and the first area includes a first control.

The second operation may be an operation of swiping upward on a screen. For example, on an interface shown in (1) in FIG. 3A, the second operation is an operation that the user swipes upward on a screen based on a dashed-line arrow. The third interface may be an interface shown in (2) in FIG. 3A. The first area may be an area corresponding to a widget 302 shown in (2) in FIG. 3A The first control may a control 303.

It may be understood that the third interface may further display other information of the first photo.

Optionally, the third interface further includes a partial area of the first photo, a second area, and/or a third area. The second area is used for displaying portrait tag information. The third area is used for displaying photographing location information of the first photo.

Step 704: Display a playback interface of a first video in response to an operation of the user on the first control, where the first video includes the first photo and a second photo, and the second photo includes the first portrait.

Certainly, when a quantity of portraits included in a photo does not exceed a processing upper limit (for example, 10) of the gallery application, the gallery application may generate a moment video related to the portraits.

Optionally, in some embodiments, the operation of the user on the first control is an operation of the user tapping the first control. For example, the first control is the control 303 shown in (2) in FIG. 3A.

The first video is a portrait moment video corresponding to the first photo, and may also be briefly referred to as a moment video. For example, (4) in FIG. 3A shows a cover of the first video.

Optionally, when the generated first video is played back, photos (that is, the first photo and a preset quantity of second photos) used for generating the first video may be sequentially played back based on time information. For example, the photos used for generating the first video are sequentially played back in an order from earliest to latest.

In this embodiment of this application, an entry of a "Generate moments" function is added to the gallery application, and an electronic device may generate, by using the entry, a moment video related to a target portrait for the user, to meet a requirement that the user expects to view a historical memory moment related to the portrait, greatly improving user experience.

When it is recognized that a quantity of group photos of the first portrait and a second portrait is large or calculation power is limited, waiting time is needed during generation of the first video. During waiting for the first video to be loaded, a dynamic icon may be displayed to the user, to indicate that a video is being loaded currently.

Optionally, in some embodiments, during generation of the first video, the method further includes:
displaying a dynamic icon in the first area, where the dynamic icon indicates that the first video is being generated.

For example, the dynamic icon may be an icon 305 on an interface shown in (3) in FIG. 3A.

The foregoing describes a case in which the first photo includes a portrait. For a case in which a photo does not include a portrait, for example, for a landscape photo, after an upward swiping operation is performed on a viewing page of a full image of the photo, the electronic device does not display a function entry for generating a moment.

Optionally, in some embodiments, the first interface further includes a thumbnail of a second photo, and the second photo does not include a portrait. The method further includes:
displaying a fourth interface in response to an operation of the user tapping the thumbnail of the second photo, where the fourth interface is used for displaying a viewing page of the second photo; and
displaying a fifth interface in response to a fourth operation of the user on the fourth interface, where the fifth interface does not include the first control.

For example, the second photo is a photo 204 in (2) in FIG. 2. The fourth interface is an interface shown in (2) in FIG. 3B. The fifth interface is an interface shown in (3) in FIG. 3B.

Optionally, in some embodiments, after the displaying a playback interface of a first video, the method further includes:
displaying a sixth interface in response to a fifth operation of the user on the playback interface of the first video, where the sixth interface includes the first area, the first area does not include the first control, and the first area includes a thumbnail and a playback control of the first video; and
displaying the playback interface of the first video in response to an operation of the user tapping the playback control.

In other words, after the first video is generated, in response to a return operation of the user (for example, an operation of tapping a return control 903 shown in FIG. 9E, or a sideward swiping operation performed on a side-swipe area of a screen), the mobile phone displays a swipe-up interface of the first photo. The originally function entry (the first control) that is in the first area of the interface and that is used for displaying generation of a moment is changed to the thumbnail and the playback control of the first video. For example, the sixth interface may be an interface shown in FIG. 9C.

Optionally, in some embodiments, the first interface further includes a thumbnail of a third photo, and the third photo includes the first portrait. The method further includes:
displaying a ninth interface in response to an operation of the user tapping the thumbnail of the third photo, where the ninth interface is used for displaying a viewing page of the third photo; and
displaying a tenth interface in response to a seventh operation of the user on the ninth interface, where the tenth interface includes the first area, and the first area includes the thumbnail and the playback control of the first video.

For example, it is assumed that the third photo includes two portraits, and the third photo is a photo 203 shown in (2) in FIG. 2. The ninth interface is an interface shown in FIG. 9B. The seventh operation is an operation of swiping upward based on a dashed-line arrow shown in FIG. 9A. The tenth interface is an interface shown in FIG. 9C or an interface shown in FIG. 9D.

After the first video is generated, the first video may be further updated. The following provides two manners.

### Manner 1

Optionally, in some embodiments, the first area further includes a third control. The method further includes:
updating the first video in response to an operation of the user tapping the third control; and
displaying a playback interface of an updated first video after the update is completed.

The third control may be understood as an update control. For example, the third control is an update control 907 shown in FIG. 9D.

### Manner 2

Optionally, in some embodiments, the method further includes:
displaying an eleventh interface in response to an eighth operation of the user, where the eleventh interface is used for displaying a moment page of a gallery application, and the eleventh interface includes a second control;
displaying a twelfth interface in response to an operation of the user tapping the second control, where the twelfth interface is used for displaying data of a plurality of portraits;
generating a third video in response to an operation of the user selecting the first portrait, where the third video is an updated video of the first video; and
displaying a playback interface of the third video.

To be specific, after the first video is generated in response to the operation of the user tapping the first control, if the user enters a portrait selection interface at the function entry for generating a moment on the moment page of the gallery application, and regenerates a corresponding moment video by selecting a target portrait as the first portrait, the mobile phone updates the first video in response to an operation of the user selecting the first portrait, to obtain the third video.

When the first video cannot be generated, a window may be further popped up for the user, to inform the user. The following describes a case in which the first video cannot be generated in different scenarios.

Optionally, in some embodiments, the first interface further includes a thumbnail of a fourth photo, where the fourth photo includes a second quantity of portraits, and the second quantity is greater than a second threshold. The method further includes:
displaying a thirteenth interface in response to an operation of the user tapping the thumbnail of the fourth photo, where the thirteenth interface is used for displaying a viewing page of the fourth photo;
displaying a fourteenth interface in response to a fourth operation (for example, an operation of swiping upward on a screen) of the user on the thirteenth interface, where the fourteenth interface includes the first area, and the first area includes the first control; and
displaying a fifteenth interface in response to an operation of the user tapping the first control, where the fifteenth interface includes a first window, and the first window is used for prompting the user that a video cannot be generated.

In other words, when it is recognized that a quantity of portraits in the photo is greater than the second threshold, the first video cannot be generated. For example, the thirteenth interface is an interface shown in (1) in FIG. 5. The fourteenth interface is an interface shown in (2) in FIG. 5. The fifteenth interface is an interface shown in (3) in FIG. 5, and the first window is a window 402 shown in (3) in FIG. 5.

Optionally, in some embodiments, the method further includes:
displaying a sixteenth interface in response to the operation of the user tapping the first control, where the sixteenth interface includes a second window, the second window is used for prompting the user that a video cannot be generated, and a quantity of photos including the first portrait is less than a first threshold.

For example, the sixteenth interface is an interface shown in FIG. 4.

In addition to triggering generation of the first video when viewing a photo in a full image, this embodiment of this application further provides another entry for generating the first video, to be specific, a function entry for generating a moment is newly added to the moment page in the gallery application, to trigger generation of the first video. It should be noted that the function entry that is for generating a moment and that is set on the moment page in the gallery application and the foregoing function entry set on the upward swiping page of the full image of the photo may be independently implemented or may be implemented in a combination. This is not specifically limited.

Optionally, in some embodiments, the method further includes:
displaying a seventh interface in response to a sixth operation of the user, where the seventh interface is used for displaying a moment page (also referred to as a memory page) of a gallery application, and the seventh interface includes a second control;
displaying an eighth interface in response to an operation of the user tapping the second control, where the eighth interface is used for displaying data of a plurality of portraits;
generating a second video in response to an operation of the user selecting a second portrait, where the second video includes photos of the second portrait; and
displaying a playback interface of the second video.

A third interface is displayed in response to a third operation of the user, where the third interface is used for displaying the moment page (also referred to as a moment page) of the gallery application, and the third interface includes a third control.

A fourth interface is displayed in response to an operation of the user on the third control, where the fourth interface is used for displaying data of a plurality of portraits.

The second video is generated in response to an operation of the user selecting the first portrait and the second portrait, where the second video is used for updating the first video.

A playback interface of the second video is displayed.

For example, the seventh interface is an interface shown in FIG. 6A, and the second control is a control 501 shown in FIG. 6A. The eighth interface is an interface shown in FIG. 6B.

Certainly, the user may select a plurality of portraits to generate a corresponding video. For example, in FIG. 6C, the user selects a portrait A and a portrait B.

Similarly, in some embodiments, for a case in which the user actively selects a target portrait to generate a video, there may be a case in which a video cannot be generated. In this case, a window may also be used to prompt the user.

Optionally, in some embodiments, the method further includes:
displaying a seventeenth interface in response to an operation of the user selecting a third portrait, where the seventeenth interface includes a third window, the third window is used for prompting the user that a video cannot be generated, and a quantity of photos including the third portrait is less than a third threshold.

For example, the seventeenth interface may be an interface shown in (1) in FIG. 8, and the third window is a window 801.

Optionally, in some embodiments, the method further includes:
after the displaying an eighth interface, the method further includes:
displaying an eighteenth interface in response to an operation of the user selecting a third quantity of portraits, where the eighteenth interface includes a fourth window, the fourth window is used for prompting the user that a video cannot be generated, and the third quantity is greater than a fourth threshold.

For another example, the eighteenth interface may be an interface shown in (2) in FIG. 8, and the fourth window is a window 802.

Optionally, in some embodiments, after the first video is generated, the method further includes:
obtaining a plurality of second photos based on the first portrait;
selecting, from the plurality of second photos, a first quantity of second photos according to a principle of even time distribution; and
selecting, from the first quantity of second photos, a second quantity of second photos according to a principle of a timeline from earliest to latest, where the preset quantity is the second quantity.

That the first video is generated includes:
generating the first video based on the second quantity of second photos and the first photo.

In other words, before the first video is generated, a photo that meets a requirement needs to be initially selected from the gallery. The photo that meets a requirement is a photo that meets a portrait requirement, or a photo that includes a target portrait. For example, if a moment video of the first portrait needs to be generated, a photo that meets a requirement is a single-person photo of the first portrait. For another example, if a moment video of the first portrait and the second portrait needs to be generated, a photo that meets a requirement is a group photo of the first portrait and the second portrait, and the group photo does not include another portrait other than the first portrait and the second portrait. Certainly, optionally, another requirement may also be set to perform initial selection, for example, clarity of a photo.

For a plurality of photos that meet the requirement, the first quantity of photos may be selected according to the principle of even time distribution. Subsequently, the second quantity of photos are selected from the first quantity of photos according to the principle of a timeline from earliest to latest, and the first video is generated based on the second quantity of photos.

For example, the user photographs a large quantity of photos within a specific time period. To avoid a case in which there are too many photos selected within a specific time period, photos of first data may be selected according to the principle of even time distribution.

Optionally, in some embodiments, the selecting, from the plurality of second photos, a first quantity of second photos according to a principle of even time distribution includes any one of the following cases:
selecting all the plurality of second photos when a quantity of the plurality of second photos is less than or equal to the first threshold;
selecting the preset quantity of second photos based on a first policy when the quantity of the plurality of second photos is greater than the first threshold, and a quantity of months corresponding to the second photos in the quantity of the plurality of second photos is less than the first threshold, where the first policy is that a plurality of rounds of photo selection are performed based on month information, until the first quantity of second photos are obtained; and
selecting the first quantity of second photos based on a second policy when the quantity of months corresponding to the second photos in the quantity of the plurality of second photos is greater than the first threshold, where the second policy is that a photo is selected based on month information and rating information of the photo.

An example in which a video of the first portrait and the second portrait needs to be generated is used. When generation of the first video is triggered, photos including the first portrait and the second portrait may be selected from all photos in the gallery application. Assuming that the first threshold is 100, if a quantity of a plurality of second photos is less than 100, all the plurality of second photos are selected. If the quantity of the plurality of second photos is greater than or equal to 100, and a quantity of months corresponding to the first quantity of second photos is less than 100, a plurality of rounds of photo selection may be performed until 100 photos are selected. Each round of photo selection means that one second photo is selected from photos in each month. If the quantity of the plurality of second photos is greater than 100, and a quantity of months corresponding to the quantity of the plurality of second photos is greater than or equal to 100, a second photo having a highest aesthetic score is selected from photos in each month, to obtain 100 second photos.

Optionally, in some embodiments, the selecting, from the first quantity of second photos, a second quantity of second photos according to a principle of a timeline from earliest to latest, where the preset quantity is the second quantity includes:
selecting all the plurality of second photos when the first quantity is less than or equal to the second threshold; and
selecting the second quantity of second photos based on a timeline from earliest to latest when the first quantity is greater than the second threshold.

For example, the second threshold is 50, and if 100 second photos are selected above, 50 photos may be selected according to an order from earliest to latest by month.

Optionally, the first threshold and the second threshold may be different values, or may be a same value. This is not specifically limited.

It should be noted that the moment video may be updated subsequently by using a new photo (that is, a photo that does not exist when the moment video is generated, or a photo newly photographed by the user). When the moment video is updated, the foregoing logic for selecting a photo and the logic for generating a moment video may be performed again, and a photo used when the moment video is updated needs to be selected.

It should be noted that the foregoing logic for selecting a photo is described by using an example in which the first photo is included. In other words, if the user triggers generation of the first video from the upward swiping page of the full image of the first photo, the generated first video definitely includes the first photo. There is no such limit for a case in which the first video is generated from the entry of the moment page of the gallery application.

For example, assuming that the user generates the first video from the entry of the moment page of the gallery application, after selecting the first portrait and the second portrait, the user first selects a photo based on the following logic: initially selecting N photos (photos including both the first portrait and the second portrait) meeting a requirement from the gallery application. Assuming that the first threshold is 100, if N is less than 100, N photos may be selected. If N is greater than 100, and a quantity of months corresponding to the N photos is less than 100, a plurality of rounds of photo selection may be performed until 100 photos are selected. Each round of photo selection means that one photo is selected from photos in each month. If N is greater than 100, and a quantity of months corresponding to the N photos is greater than or equal to 100, a photo with a highest aesthetic score is selected from photos in each month, to obtain 100 photos. After the photo is selected based on the foregoing logic, assuming that M photos are obtained, a video of the first portrait and the second portrait may be generated based on the M photos according to the following logic: if M is less than or equal to 50, selecting M photos to generate a video; or if M is greater than 50, selecting 50 photos according to an order from earliest to latest by month to generate a video. For example, when N is less than 100, if there is a new photo in the gallery, the user may reselect the first portrait and the second portrait to generate the first video, to update the first video.

It may be understood that quantity thresholds in the foregoing implementations may be set to reasonable values based on an actual requirement. This is not limited in this embodiment of this application.

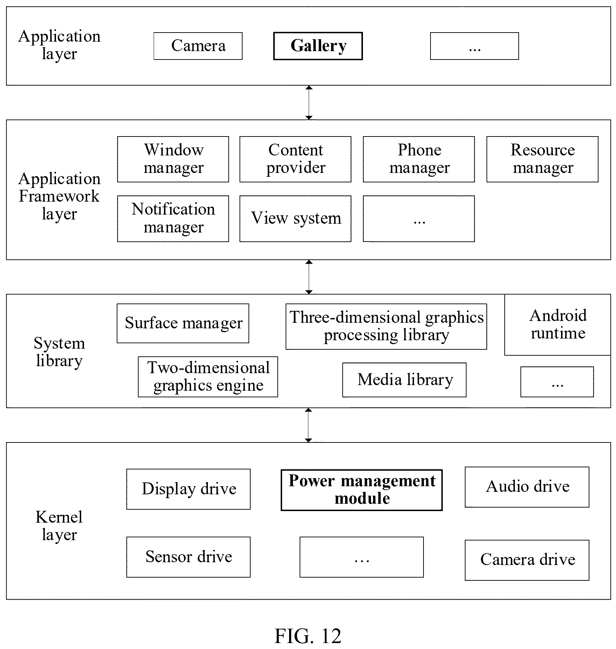

FIG. 12 is a schematic diagram of a software structure of an electronic device 100 according to an embodiment of this application. In a layered architecture, software is divided into several layers, and each layer has a clear role and task. The layers communicate with each other through software interfaces. In some embodiments, an Android system may be sequentially divided into five layers from top to bottom: an application (application, APP) layer, an application framework layer (FWK for short), a system library, and a kernel layer.

The application layer may include a series of application packages. For example, as shown in FIG. 12, the application layer includes a camera application and a gallery application.

It may be understood that the application layer may further include other applications, such as Calendar, Phone, Maps, Navigation, WLAN, Bluetooth, Music, Video, Messages, Browser, WeChat, Alipay, and Taobao.

The application framework layer provides an application programming interface (application programming interface, API) and a programming framework for applications at the application layer. The application framework layer may include some predefined functions.

It may be understood that the application framework layer may further include other content, such as a window manager, a content provider, a view system, a phone manager, a resource manager, and a notification manager.

The window manager is configured to manage a window application. The window manager may obtain a size of a display screen, determine whether there is a status bar, perform screen locking, perform screen capturing, and the like.

The content provider is configured to store and obtain data, and enable the data to be accessible by an application. The data may include a video, an image, audio, a phone call made and answered, a browsing history, favorites, and a phone book.

The view system includes visual controls such as a text display control and a picture display control. The view system may be configured to create an application. A display interface may be formed by one or more views, for example, a display interface including a message notification icon may include a view for displaying text and a view for displaying a picture. The application layer and the application framework layer are run in a virtual machine. The virtual machine executes Java files of the application layer and the application framework layer as binary files. The virtual machine is configured to execute functions, such as object lifecycle management, stack management, thread management, security and exception management, and garbage collection.

As shown in FIG. 12, the system library may include a camera service function.

The system library may further include a plurality of functional modules, such as a surface manager (surface manager), a media library (Media Library), a three-dimensional graphics processing library (for example, an open graphics library for embedded systems (open graphics library for embedded systems, OpenGL ES)), and a 2D graphics engine (for example, a skia graphics library (skia graphics library, SGL)).

The surface manager is configured to manage a display subsystem and provide fusion of a 2D layer and a 3D layer for a plurality of applications.

The media library supports playback and recording of audio in a plurality of formats, playback and recording of videos in a plurality of formats, and still image files. The media library may support a plurality of audio and video encoding formats, for example, MPEG4, H.264, moving picture experts group audio layer III (moving picture experts group audio layer III, MP3), advanced audio coding (advanced audio coding, AAC), adaptive multi-rate (adaptive multi-rate, AMR), joint photographic experts group (joint photographic experts group, JPG), and portable network graphics (portable network graphics, PNG).

The three-dimensional graphics processing library is configured to implement three-dimensional drawing, image rendering, compositing, and layer processing.

The two-dimensional graphics engine is a drawing engine for 2D drawings.

The kernel layer is a layer between hardware and software. As shown in FIG. 12, the kernel layer may include drive modules such as a power management module, a display driver, and a camera driver. The camera driver is a driver layer of a camera device, and is mainly responsible for interaction with hardware. Optionally, the power management module may report a charging event to the application layer, for example, the gallery application, so that the gallery application performs photo analysis when the electronic device is in a charging state, facilitating reducing of power consumption.

Using the gallery application as an example, the gallery application at the application layer may be displayed on a screen of the electronic device in a form of an icon. When the icon of the gallery application is triggered, the electronic device runs the camera application. The gallery application runs on the electronic device, and the electronic device may send a corresponding touch event to the driver layer based on an operation of a user. When a touchscreen receives the touch event, the gallery application is started, and a gallery page is displayed on the screen by invoking display of the driver layer.

For example, the gallery application at the application layer receives a viewing operation triggered by the user, and the viewing operation is used for viewing a pushed photo or video. The gallery application displays the pushed photo or video on the display screen by invoking the display driver.

It may be learned from the foregoing that according to the video processing method provided in this application, the entry of the" Generate moments" function is added to the gallery application, to generate a moment video related to a portrait, to meet a requirement that the user expects to view a historical memory moment related to the portrait, intuitively perceiving a change brought by a transition from a year to the object, and greatly improving user experience.

This application further provides a computer program product. When the computer program product is executed by a processor, the method in any method embodiment of this application is implemented.

The computer program product may be stored in a memory, and is finally converted, by performing processing processes such as preprocessing, compiling, assembling, and linking, into an executable target file that can be executed by the processor.

This application further provides a computer-readable storage medium. The computer-readable storage medium stores a computer program. When the computer program is executed by a computer, the method in any method embodiment of this application is implemented. The computer program may be a program in a high-level programming language, or may be an executable target program.

The computer-readable storage medium may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be clearly understood by a person skilled in the art that, for convenience and brevity of description, for specific working processes and technical effects of the foregoing apparatus and device, refer to corresponding processes and technical effects in the foregoing method embodiments. Details are not described herein again.

In the several embodiments provided in this application, the disclosed system, apparatus, and method may be implemented in other manners. For example, some features of the method embodiments described above may be ignored or not performed. The described apparatus embodiment is merely an example, and unit division is merely logical function division and may be another division in actual implementation. A plurality of units or components may be combined or integrated into another system. In addition, a coupling between units or a coupling between components may be a direct coupling, or may be an indirect coupling. The coupling includes an electrical, mechanical, or another form of connection.

It should be understood that sequence numbers of the processes do not mean execution sequences in various embodiments of this application. The execution sequences of the processes should be determined according to functions and internal logic of the processes, and should not be constituted as any limitation on the implementation processes of embodiments of this application.

In addition, the terms "system" and "network" in this specification may be used interchangeably in this specification. The term "and/or" used herein describes only an association relationship for describing associated objects and represents that three relationships may exist. For example, A and/or B may represent the following three cases: only A exists, both A and B exist, and only B exists. In addition, the character "/" in this specification generally indicates an "or" relationship between the associated objects.

In conclusion, the foregoing descriptions are merely example embodiments of the technical solutions of this application, and are not intended to limit the protection scope of this application. Any modification, equivalent replacement, or improvement made without departing from the spirit and principle of this application shall fall within the protection scope of this application.

## Claims

1. A video processing method, comprising:
displaying a first interface in response to a first operation of a user, wherein the first interface comprises a thumbnail of a first photo, and the first photo comprises a first portrait;
displaying a second interface in response to an operation of the user tapping the thumbnail of the first photo, wherein the second interface is used for displaying a viewing page of the first photo;
displaying a third interface in response to a second operation of the user on the second interface, wherein the third interface comprises a first area, and the first area comprises a first control; and
displaying a playback interface of a first video in response to an operation of the user tapping the first control, wherein the first video comprises the first photo and a second photo, and the second photo comprises the first portrait.

2. The method according to claim 1, wherein the first interface further comprises a thumbnail of a second photo, and the second photo does not comprise a portrait; and the method further comprises:
displaying a fourth interface in response to an operation of the user tapping the thumbnail of the second photo, wherein the fourth interface is used for displaying a viewing page of the second photo; and
displaying a fifth interface in response to a fourth operation of the user on the fourth interface, wherein the fifth interface does not comprise the first control.

3. The method according to claim 1 or 2, wherein after the displaying a playback interface of a first video, the method further comprises:
displaying a sixth interface in response to a fifth operation of the user on the playback interface of the first video, wherein the sixth interface comprises the first area, the first area does not comprise the first control, and the first area comprises a thumbnail and a playback control of the first video; and
displaying the playback interface of the first video in response to an operation of the user tapping the playback control.

4. The method according to any one of claims 1 to 3, wherein the method further comprises:
displaying a seventh interface in response to a sixth operation of the user, wherein the seventh interface is used for displaying a moment page of a gallery application, and the seventh interface comprises a second control;
displaying an eighth interface in response to an operation of the user tapping the second control, wherein the eighth interface is used for displaying data of a plurality of portraits;
generating a second video in response to an operation of the user selecting a second portrait, wherein the second video comprises photos of the second portrait; and
displaying a playback interface of the second video.

5. The method according to any one of claims 1 to 4, wherein the first interface further comprises a thumbnail of a third photo, and the third photo comprises the first portrait; and the method further comprises:
displaying a ninth interface in response to an operation of the user tapping the thumbnail of the third photo, wherein the ninth interface is used for displaying a viewing page of the third photo; and
displaying a tenth interface in response to a seventh operation of the user on the ninth interface, wherein the fifth interface comprises the first area, and the first area comprises the thumbnail and the playback control of the first video.

6. The method according to claim 5, wherein the first area further comprises a third control; and the method further comprises:
updating the first video in response to an operation of the user tapping the third control; and
displaying a playback interface of an updated first video after the update is completed.

7. The method according to claim 5, wherein the method further comprises:
displaying an eleventh interface in response to an eighth operation of the user, wherein the eleventh interface is used for displaying a moment page of a gallery application, and the eleventh interface comprises a second control;
displaying a twelfth interface in response to an operation of the user tapping the second control, wherein the twelfth interface is used for displaying data of a plurality of portraits;
generating a third video in response to an operation of the user selecting the first portrait, wherein the third video is an updated video of the first video; and
displaying a playback interface of the third video.

8. The method according to any one of claims 1 to 7, wherein the third interface further comprises a partial area of the first photo, a second area, and/or a third area, wherein the second area is used for displaying portrait tag information; and the third area is used for displaying photographing location information of the first photo.

9. The method according to any one of claims 1 to 7, wherein the first interface further comprises a thumbnail of a fourth photo, wherein the fourth photo comprises a second quantity of portraits, and the second quantity is greater than a second threshold; and the method further comprises:
displaying a thirteenth interface in response to an operation of the user tapping the thumbnail of the fourth photo, wherein the thirteenth interface is used for displaying a viewing page of the fourth photo;
displaying a fourteenth interface in response to a fourth operation of the user on the thirteenth interface, wherein the fourteenth interface comprises the first area, and the first area comprises the first control; and
displaying a fifteenth interface in response to an operation of the user tapping the first control, wherein the fifteenth interface comprises a first window, and the first window is used for prompting the user that a video cannot be generated.

10. The method according to any one of claims 1 to 9, wherein the method further comprises:
displaying a sixteenth interface in response to the operation of the user tapping the first control, wherein the sixteenth interface comprises a second window, the second window is used for prompting the user that a video cannot be generated, and a quantity of photos comprising the first portrait is less than a first threshold.

11. The method according to claim 4, wherein the method further comprises:
displaying a seventeenth interface in response to an operation of the user selecting a third portrait, wherein the seventeenth interface comprises a third window, the third window is used for prompting the user that a video cannot be generated, and a quantity of photos comprising the third portrait is less than a third threshold.

12. The method according to claim 4, wherein after the displaying an eighth interface, the method further comprises:
displaying an eighteenth interface in response to an operation of the user selecting a third quantity of portraits, wherein the eighteenth interface comprises a fourth window, the fourth window is used for prompting the user that a video cannot be generated, and the third quantity is greater than a fourth threshold.

13. The method according to any one of claims 1 to 12, wherein during generating of the first video, the method further comprises:
displaying a dynamic icon in the first area, wherein the dynamic icon indicates that the first video is being generated.

14. The method according to any one of claims 1 to 13, wherein before the first video is generated, the method further comprises:
obtaining a plurality of second photos based on the first portrait, wherein each second photo comprises the first portrait;
selecting, from the plurality of second photos, a first quantity of second photos according to a principle of even time distribution; and
selecting, from the first quantity of second photos, a second quantity of second photos according to a principle of a timeline from earliest to latest; and
that the first video is generated comprises:
generating the first video based on the second quantity of second photos and the first photo.

15. An electronic device, comprising a processor and a memory, wherein the processor is coupled to the memory, the memory is configured to store a computer program, and when the computer program is executed by the processor, the electronic device is enabled to perform the method according to any one of claims 1 to 14.

16. A computer-readable storage medium, wherein the computer-readable storage medium stores a computer program, and when the computer program is executed by a processor, an electronic device is enabled to perform the method according to any one of claims 1 to 14.

17. A chip system, wherein the chip system is used in an electronic device, the chip system comprises one or more processors, and the processors are configured to invoke computer instructions, to enable the electronic device to perform the method according to any one of claims 1 to 14.
